# EUROPÄISCHE PATENTANMELDUNG

(11) **EP 4 374 746 A1**
(43) Veröffentlichungstag der Anmeldung: **29.05.2024**
(21) Anmeldenummer: 23208213.1
(22) Anmeldetag: 07.11.2023
(51) Int. Cl.: A47J 27/04, A47J 36/08, A47J 36/38

(54) **KÜCHENGERÄT**

(30) Priorität: 22.11.2022 BE 202205945
(71) Anmelder: Miele & Cie. KG, 33332 Gütersloh (DE)
(72) Erfinder: Diestelhorst, Tim Otis, 32257 Bünde (DE); Lenzen, Ulrike, 32052 Herford (DE); Brinkmann, René-Pascal, 33689 Bielefeld (DE); Biemelt, Michael, 33397 Rietberg (DE); Peters, Andre, 32051 Herford (DE); Busse, Christian, 32289 Rödinghausen (DE); Hinrichs, Stefan, 32469 Petershagen (DE); Metz, Thomas, 32257 Bünde (DE); Thiel, Mario, 32278 Kirchlengern (DE); Wank, Klaus, 32278 Kirchlengern (DE); Bergmeier, Tino, 32278 Kirchlengern (DE)

(57) **Zusammenfassung**

Die Erfindung betrifft ein Küchengerät (1), vorzugsweise ein Küchengerät (1) mit Dampffunktion, besonders vorzugsweise eine Dampfgarschublade (1), mit einem Innenraum (12), vorzugsweise einem Garraum (12), welcher ausgebildet ist, wenigstens ein Gargeschirr und/oder wenigstens ein Lebensmittel durch eine Zugangsöffnung (13) von oben aufzunehmen, und mit einem Deckel (14), welcher ausgebildet ist, durch Schwenken mittels eines Schwenkelements (15), vorzugsweise eines Scharniers (15), die Zugangsöffnung (13) des Innenraums (12) von oben zu verschließen und freizugeben. Das Küchengerät (1) ist gekennzeichnet durch wenigstens ein Dichtelement (18), welches ausgebildet und an der Unterseite (14a) des Deckels (14) angeordnet ist,
• bei geschlossenem Deckel (14) den Innenraum (12) fluiddicht gegenüber der Unterseite (14a) des Deckels (14) abzudichten und
• bei hochgeschwenktem Deckel (14) herunterlaufende Flüssigkeit, insbesondere Kondenswasser, aufzufangen und in den Innenraum (12), vorzugweise in einen Abfluss (17a), zu leiten.

## Beschreibung

Die Erfindung betrifft ein Küchengerät gemäß dem Patentanspruch 1.

Zur Zubereitung von Lebensmitteln, welche auch als zu behandelndes Gut oder als Gargut bezeichnet werden können, sind verschiedene Küchengeräte bekannt, welche auch als Gargeräte bezeichnet werden können. Hierzu gehören die Kochfelder, auf denen das Gargut in einem Gargeschirr wie zum Beispiel in einem Kochtopf, mit oder ohne Deckel, in einer Pfanne und dergleichen durch Kochen, Braten und dergleichen gegart werden kann.

Auch sind Gargeräte bekannt, welche einen unbeweglich, d.h. feststehend, mit dem Gargerät ausgebildeten Garraum aufweisen, in welchen das Gargut in bzw. auf einem Gargeschirr angeordnet und bei geschlossenem Garraum des Gargeräts gegart werden kann. Ein derartiges Gargerät kann zum Beispiel ein Backofen, ein Dampfgarer, eine Mikrowelle, ein Kombinationsgerät aus Backofen mit Dampfgarer und bzw. oder mit Mikrowelle und dergleichen sein. Derartige Gargeräte mit feststehendem Garraum weisen üblicherweise zumindest in Deutschland in der vertikalen Richtung eine Bauhöhe von ca. 45 cm auf, wobei Backöfen auch mit einer Bauhöhe von ca. 60 cm üblich sind.

Derartige Gargeräte mit feststehendem Garraum haben gemeinsam, dass sie ein äußeres Gehäuse als Außengehäuse aufweisen, welches das Gargerät nach außen im Wesentlichen umschließt und dessen einzelnen Bauteile und Elemente schützt sowie gemeinsam handhabbar macht. Innerhalb des Gargerätes wird ein Innenraum ausgebildet, welcher den Garraum darstellt und im Wesentlichen von einem inneren Gehäuse als Innengehäuse, auch als Garraummuffel oder Muffel bezeichnet, umschlossen wird. Zwischen dem Innengehäuse und dem Außengehäuse wird ein Gehäuseraum als Zwischenraum gebildet, in welchem Funktionselemente des Gargeräts wie zum Beispiel eine Steuerung bzw. eine Steuerungseinheit, eine elektrische Energieversorgung und sonstige Bauelemente angeordnet sein können, welche dem bestimmungsgemäßen Gebrauch des Gargerätes dienen. In der Tiefe von Vorne, d.h. aus Sicht eines Benutzers betrachtet, schließt das Außengehäuse bzw. eine Blende in Form eines Möbelmaterials oder in Form einer Bedienblende und dergleichen mit dem Innengehäuse zusammen den Gehäuseraum ab, so dass der Gehäuseraum für den Benutzer nicht zugänglich ist.

Der Innenraum des Gargeräts weist in der Tiefe nach Vorne eine Durchgangsöffnung als Zugangsöffnung auf, durch welche hindurch der Innenraum des Gargeräts für den Benutzer zugänglich ist, um Gargeschirre in den Innenraum des Gargeräts als dessen Garraum einzuführen und dort anzuordnen sowie um Gargeschirre nach erfolgter Behandlung des Garguts aus dem Innenraum des Gargeräts zu entnehmen und von dort zu entfernen. Die Zugangsöffnung kann mittels eines Verschlusselements zum Beispiel in Form einer seitlich schwenkbaren Tür, einer nach unten schwenkbaren Klappe und dergleichen vom Benutzer geöffnet werden, um auf den Innenraum des Gargeräts zugreifen können, wie zuvor beschrieben, oder um den Innenraum des Gargeräts zu verschließen und den Garvorgang bzw. den Garprozess auszuführen. Ein derartiges Verschlusselement kann geschlossen ausgebildet sein oder ein Sichtfenster aufweisen, um dem Benutzer einen Einblick in den geschlossenen Innenraum des Gargeräts zu ermöglichen.

Derartige Gargeräte mit feststehendem Garraum werden üblicherweise als Einbaugeräte bzw. als Kücheneinbaugeräte ausgebildet, um platzsparend und auf einer für den Benutzer gut zugänglichen Höhe in der vertikalen Richtung in Küchenmöbeln wie zum Beispiel in Einbauschränken einer Küche feststehend mit ihrem Außengehäuse angeordnet zu werden und mit ihrem Verschlusselement, ggfs. zusätzlich mit ihrer Blende, siehe oben, nach Vorne zum Benutzer hin flächig bündig mit den Oberflächen der übrigen Gargeräte, Schubladen, Türen und dergleichen des Küchenmöbels abzuschließen, was den optischen Eindruck für den Benutzer verbessern kann.

Es sind auch andere Kücheneinbaugeräten wie zum Beispiel mit Wärmeschubladen, Vakuummierschubladen und dergleichen bekannt, welche wie zuvor beschrieben in der Küche montiert und insbesondere mit den zuvor beschriebenen Gargeräten als Einbaugeräte kombiniert horizontal übereinander und bzw. oder vertikal nebeneinander angeordnet werden. Wärmeschubladen dienen zum Beispiel dem Warmhalten des gegarten Garguts ohne weitere Garung und dem Vorwärmen von Geschirr. In Vakuummierschubladen können Lebensmitteln im Vakuum in einer Verpackung luftdicht verschlossen werden.

Derartige Schubladen als Küchengeräte sind grundsätzlich vergleichbar den zuvor beschriebenen Gargeräten mit feststehendem Garraum aufgebaut, wobei Schubladen deutlich flacher, d.h. kleiner in der vertikalen Richtung, ausgebildet sind und somit vom Benutzer nach Vorne zu sich hin aus dem Küchenmöbel herausgezogen werden müssen, um in der vertikalen Richtung von oben einen Zugriff auf ihren Innenraum zu ermöglichen. Zu diesem Zweck weist der bewegliche Teil der Schublade, welcher auch als Auszug bezeichnet werden kann, einen Auszugsboden auf, welcher der Aufnahme zum Beispiel des Gargeschirrs in der vertikalen Richtung von oben dient und zum Beispiel über in der Querrichtung seitlich angeordnete Schienen in der Tiefe beweglich gegenüber dem Innengehäuse der Schublade ausgebildet sein kann. Der Auszugsboden weist üblicherweise in der Tiefe nach Vorne hin eine vertikal ausgerichtete Blende auf, welche den Innenraum der Schublade bzw. dessen Zugangsöffnung im geschlossen Zustand verschließt.

Derartige Schubladen, auch Einbauschubladen genannt, weisen üblicherweise zumindest in Deutschland in der vertikalen Richtung eine Bauhöhe von ca. 15 cm auf. Schubladen werden üblicherweise in der vertikalen Richtung unterhalb eines Gargeräts mit feststehendem Garraum wie zum Beispiel unterhalb eines Backofens, unterhalb eines Dampfgarers und dergleichen oder in Kombination mit einer weiteren Schublade in der vertikalen Richtung übereinander angeordnet, können jedoch auch einzeln und eigenständig in einem Küchenmöbel eingebaut werden. Da die Einbauräume für Kücheneinbaugeräte in Küchenmöbel, welche auch als Nischen bezeichnet werden können, üblicherweise zumindest in Deutschland in der vertikalen Richtung eine Höhe von ca. 60 cm aufweisen, können insbesondere eine Schublade mit ca. 15 cm Bauhöhe und ein Gargerät mit feststehendem Garraum mit ca. 45 cm Bauhöhe modular miteinander kombiniert als Einbaugeräte verwendet werden.

Es ist auch bekannt, Gargeräte mit Dampfgarfunktion als Einbauschubladen auszubilden, welche als Dampfgarschubladen bezeichnet werden können. Üblicherweise nehmen derartige Dampfgarschubladen in ihrem Garraum, welcher auf dem Auszugsboden angeordnet ist, wenigstens ein Gargefäß mit Gargut auf. Das Gargefäß ist üblicherweise entnehmbar, üblicherweise nach oben aus der geöffneten Einbauschublade heraus. Entsprechend ist die Zugangsöffnung zum Garraum bei Dampfgarschubladen horizontal und üblicherweise rechteckig ausgebildet und kann üblicherweise mit einem schwenkbaren Deckel verschlossen und geöffnet werden. Der schwenkbare Deckel ist üblicherweise an der hinteren Kante der Dampfgarschublade, welcher der Blende abgewandt ist, nach oben hin schwenkbar angeordnet.

In geschlossenen Einbauschubladen kann sich allgemein Kondenswasser an den Oberflächen des Innenraums inkl. der Innen- bzw. Unterseite des Verschlusselements in Form eines Deckels bilden. Dies kann umso stärker bzw. deutlicher auftreten, falls die Einbauschublade ein Einbauküchengerät aufweist bzw. darstellt, bei dessen Betrieb es zu einer Erzeugung von Wasserdampf kommen kann, da sich hierdurch die Menge an Feuchtigkeit in der Luft erhöht, welche an den Oberflächen kondensieren kann. Dies gilt insbesondere für ein Küchengerät mit Dampffunktion wie beispielsweise eine Dampfgarschublade.

In jedem Fall kann das Kondenswasser, welches sich an der Unterseite des Deckels der Einbauschublade bildet, an der Innen- bzw. Unterseite des Deckels zu einem Schwenkelement bzw. zu einem Scharnier bzw. Deckelscharnier hin herunterlaufen, wenn der Benutzer den Deckel hochklappt und somit der zuvor horizontal ausgerichtete Deckel teilweise bis vollständig in der vertikalen Richtung nach oben zeigt.

Das herunterlaufende Kondenswasser bzw. Kondensat kann somit seitlich am Deckel bzw. am Außengehäuse vorbei laufen und das Küchenmöbel erreichen, in dieses hineinfließen bzw. an dessen Möbelblende herunterfließen. Auch kann das Kondenswasser direkt von der Einbauschublade nach unten und insbesondere auf den Boden tropfen. Dies kann es erfordern, dass der Benutzer das ausgetretene Kondenswasser mit einem Lappen oder dergleichen aufsammeln und entfernen muss, um z.B. das Küchenmöbel vor Nässe zu schützen und bzw. oder die Rutschgefahr eines nassen Fußbodens zu vermeiden. In jedem Fall kann dies einen zusätzlichen Aufwand für den Benutzer darstellen. Auch kann das Kondenswasser in den Garraum gelangen und dort vom Benutzer zu entfernen sein.

Ist im Garraum eine Kondensatbehälter bzw. eine Kondensatschale als Auffangbehälter vorhanden, um das Kondensat von allen Oberflächen aufzunehmen, so dass die Kondensatmenge dessen Fassungsvermögen übersteigen, so dass das überschüssige Kondensat in den übrigen Innenraum bzw. Garraum gelangen und auch dort vom Benutzer zu entfernen sein kann. Auch kann das Kondensat an der Kondensatschale vorbei in den Innenraum gelangen, was ebenfalls ein händisches Entfernen dieses Kondensats durch den Benutzer erforderlich machen kann.

Dies kann insbesondere bei Küchengeräten auftreten, welche Dampf erzeugen bzw. verwenden wie beispielsweise Dampfgarer oder Dampfgar-Kombigeräte. Grundsätzlich kann Kondensat aber auch in anderen Küchengeräten auftreten. Dies gilt sowohl für freistehende als auch eingebaute Küchengeräte.

Der Erfindung stellt sich somit das Problem, ein Küchengerät, vorzugsweise ein Küchengerät mit Dampffunktion, besonders vorzugsweise eine Dampfgarschublade, der eingangs beschriebenen Art bereitzustellen, so dass an der Unterseite eines Deckels herunterlaufendes Kondenswasser besser als bisher bekannt aufgefangen werden kann. Dies soll insbesondere als Schublade bzw. als Einbauschublade erfolgen. In jedem Fall soll dies möglichst einfach, kostengünstig, bauraumsparend, langlebig und bzw. oder optisch unauffällig bzw. ansprechend erfolgen. Zumindest soll eine Alternative zu bekannten derartigen Küchengeräten geschaffen werden.

Erfindungsgemäß wird dieses Problem durch ein Küchengerät mit den Merkmalen des Patentanspruchs 1 gelöst. Vorteilhafte Ausgestaltungen und Weiterbildungen der Erfindung ergeben sich aus den nachfolgenden Unteransprüchen.

Somit betrifft die Erfindung ein Küchengerät, vorzugsweise ein Küchengerät mit Dampffunktion, besonders vorzugsweise eine Dampfgarschublade, mit einem Innenraum, vorzugsweise einem Garraum, welcher ausgebildet ist, wenigstens ein Gargeschirr und bzw. oder wenigstens ein Lebensmittel durch eine Zugangsöffnung von oben aufzunehmen, und mit einem Deckel, welcher ausgebildet ist, durch Schwenken mittels eines Schwenkelements, vorzugsweise eines Scharniers, die Zugangsöffnung des Innenraums von oben zu verschließen und freizugeben. Dies kann insbesondere als Einbauküchengerät und bzw. oder als Schublade bzw. als Einbauschublade realisiert werden.

Das Küchengerät ist gekennzeichnet durch wenigstens ein Dichtelement, welches ausgebildet und an der Unterseite des Deckels angeordnet ist,
- bei geschlossenem Deckel den Innenraum fluiddicht gegenüber der Unterseite des Deckels abzudichten und
- bei hochgeschwenktem Deckel herunterlaufende Flüssigkeit, insbesondere Kondenswasser, aufzufangen und in den Innenraum, vorzugweise in einen Abfluss, zu leiten.

Das Dichtelement kann somit zwei Funktionen übernehmen. Dies kann zum einen die fluiddichte Abdichtung des geschlossenen Deckels sein, wozu das Dichtelement senkrecht zu Fläche der Unterseite des Deckels elastisch ausgebildet sein kann. Das Dichtelement kann daher aus einem elastischen Material, beispielsweise aus Gummi, ausgebildet sein oder ein elastisches Material enthalten. Zusätzlich oder alternativ kann die erforderliche Elastizität des Dichtelements auch durch dessen konstruktive Gestaltung, beispielsweise durch eine federelastische Konstruktion, erreicht werden. In jedem Fall kann das Dichtelement derart entlang der Unterseite des Deckels verlaufen, so dass bei geschlossenem Deckel der Innenraum bzw. ein Rand des Innenraums in der Horizontalen von außen umschlossen wird.

Ferner kann das Dichtelement derart entlang der Unterseite des Deckels verlaufen, so dass bei hochgeklapptem Deckel die an der Unterseite des Deckels herunterlaufende Flüssigkeit in den Innenraum geleitet werden kann. Hierzu kann die herunterlaufende Flüssigkeit wenigstens von einer Seite und vorzugsweise von beiden Seiten des Schwenkelements weg zur Mitte des Deckels bzw. des Schwenkelements hin geführt werden, um nicht über das Schwenkelement bzw. die Schwenkelemente seitlich auslaufen zu können. Insbesondere kann die herunterlaufende Flüssigkeit seitlich, d.h. in der Querrichtung, wenigstens von einer Seite und vorzugsweise von beiden Seiten zur Mitte hin geleitet werden, um dort in den Innenraum bzw. in einen dortigen Abfluss, insbesondere eines Behälters wie beispielsweise eines Kondensatbehälters, abgeführt zu werden. In jedem Fall kann die herunterlaufende Flüssigkeit seitlich zusammengeführt und hierdurch gesammelt werden, was die Tropfenbildung und damit das Abfließen begünstigen kann.

Somit kann erfindungsgemäß die Führung bzw. die Ableitung derartiger Flüssigkeiten durch das Dichtelement als Führungselement bzw. als Abtropfelement der aufgefangenen Flüssigkeit verbessert werden, indem das Dichtelement nicht nur dem Abdichten sondern zusätzlich dem Auffangen und Leiten der Flüssigkeit dient. Das Dichtelement kann hierzu insbesondere einstückig und aus Silikon ausgebildet sein.

Gemäß einem Aspekt der Erfindung verjüngt sich das Dichtelement der Unterseite des Deckels in der Querrichtung zum Schwenkelement hin, vorzugsweise mittig. Dies kann die konkrete Umsetzung eines geführten Abfließens der aufgefangenen Flüssigkeit wie zuvor bereits beschrieben ermöglichen.

Gemäß einem weiteren Aspekt der Erfindung ist das Dichtelement der Unterseite des Deckels zum Schwenkelement hin trapezförmig ausgebildet. Dies kann eine alternative konkrete Umsetzung eines geführten Abfließens der aufgefangenen Flüssigkeit wie zuvor bereits beschrieben ermöglichen.

Gemäß einem weiteren Aspekt der Erfindung ist das Dichtelement der Unterseite des Deckels zum Schwenkelement hin dreieckig ausgebildet. Dies kann eine alternative konkrete Umsetzung eines geführten Abfließens der aufgefangenen Flüssigkeit wie zuvor bereits beschrieben ermöglichen.

Gemäß einem weiteren Aspekt der Erfindung weist das Dichtelement der Unterseite des Deckels ein C-förmiges, vorzugsweise innenseitig offen, oder ein O-förmiges Profil auf. Dies kann eine konkrete Möglichkeit einer konstruktiven Gestaltung des Dichtelements darstellen, um zum einen die erforderliche Elastizität des Dichtelements durch mechanische Merkmale, ggfs. zusätzlich zu einem elastischen Material, und gleichzeitig zum anderen die Abführung der aufgefangenen Flüssigkeit zu ermöglichen. Das Profil des Dichtelements ist dessen Form bzw. Kontur als Querschnitt.

Gemäß einem weiteren Aspekt der Erfindung weist das Küchengerät ferner ein Auffangelement auf, welches ausgebildet und angeordnet ist, aufgefangene Flüssigkeit von dem Dichtelement der Unterseite des Deckels zu erhalten und, vorzugsweise mittig, in den Innenraum, vorzugweise in den Abfluss, weiter zu leiten. Somit kann der Übergang der aufgefangenen Flüssigkeit zwischen der Unterseite des beweglichen bzw. schwenkbaren Deckels und dem Innenraum weiter verbessert werden, indem das Auffangelement als weiteres Bauteil vorgesehen wird, hier die Weiterleitung der aufgefangenen Flüssigkeit zu unterstützen bzw. zu übernehmen. Hierdurch kann die aufgefangene Flüssigkeit insbesondere über einen inneren Randbereich des Innenraums hinweg geführt werden, um dort Flüssigkeit zu vermeiden.

In jedem Fall kann das Auffangelement entsprechend gestaltet und angeordnet sein, um die Weiterleitung der aufgefangenen Flüssigkeit zu unterstützen bzw. zu übernehmen, wie nachfolgend näher beschrieben werden wird.

Gemäß einem weiteren Aspekt der Erfindung ist das Auffangelement ausgebildet und angeordnet, aufgefangene Flüssigkeit von dem Dichtelement der Unterseite des Deckels heruntertropfend zu erhalten. Dies kann eine Möglichkeit der konkreten Umsetzung darstellen. Insbesondere kann das Heruntertropfen die Weiterleitung bzw. die Übergang der aufgefangenen Flüssigkeit von der Unterseite des Deckels als bewegliches Element zum Innenraum hin, welcher relativ zum Deckel feststehend ist, vereinfachen, da keine mechanische Verbindung hierzu gegenüber dem schwenkbaren Deckel erforderlich ist.

Gemäß einem weiteren Aspekt der Erfindung ist das Auffangelement ausgebildet und angeordnet, aufgefangene Flüssigkeit tropfend in den Innenraum, vorzugweise in den Abfluss, weiter zu leiten. Auch dies kann dort eine konkrete Möglichkeit der Umsetzung darstellen. Dies kann die Anzahl der erforderlichen Elemente sowie deren Bauraum geringhalten, da auf eine durchgehende Führung der aufgefangenen Flüssigkeit verzichtet werden kann.

Gemäß einem weiteren Aspekt der Erfindung ist der Innenraum ausgebildet, in der Querrichtung zueinander beabstandet wenigstens zwei Gargeschirre aufzunehmen, wobei der Innenraum in der Querrichtung zwischen den beiden Gargeschirren einen Abfluss, vorzugsweise eines Kondensatbehälters, aufweist, und wobei das Auffangelement ausgebildet und angeordnet ist, aufgefangene Flüssigkeit in den Abfluss zu leiten. Dies kann eine konkrete Möglichkeit der Umsetzung darstellen. Insbesondere kann dies es ermöglichen, die aufgefangene Flüssigkeit an Gargeschirren vorbei und unter die Gargeschirre zu leiten, wo ein Abfluss nach außerhalb des Innenraums bzw. des Küchengeräts oder eine Möglichkeit vorgesehen sein kann, die aufgefangene Flüssigkeit dort zu sammeln.

Gemäß einem weiteren Aspekt der Erfindung ist das Auffangelement in der Querrichtung mittig angeordnet. Dies kann eine Möglichkeit der konkreten Umsetzung darstellen. Auch kann dies es ermöglichen, die an der Unterseite des Deckels herunterlaufende Flüssigkeit in der Querrichtung gleichmäßig zu sammeln und zu leiten.

Gemäß einem weiteren Aspekt der Erfindung ist das Auffangelement derart ausgebildet und angeordnet, so dass sich bei hochgeschwenktem Deckel der tiefste Punkt oder Abschnitt des Dichtelements der Unterseite des Deckels in der vertikalen Richtung oberhalb des Auffangelements befindet. Dies kann eine Möglichkeit der konkreten Umsetzung darstellen. Auch kann dies das Sammeln und Leiten der aufgefangenen Flüssigkeit begünstigen.

Gemäß einem weiteren Aspekt der Erfindung ist das Auffangelement zum Innenraum, vorzugweise zu einem Abfluss, hinzeigend pyramidenförmig zulaufend ausgebildet. Dies kann eine Möglichkeit der konkreten Umsetzung darstellen.

Gemäß einem weiteren Aspekt der Erfindung weist das Küchengerät einen Auffangeinsatz auf, welcher auf und bzw. oder am Auffangelement angeordnet und ausgebildet ist, das Auffangelement zum Innenraum, vorzugweise zu einem Abfluss, hin zu verlängern. Dies kann das Leiten der aufgefangenen Flüssigkeit zum Innenraum bzw. zum Abfluss hin weiter verbessern. Insbesondere kann hierdurch die Umsetzung des Leitens der aufgefangenen Flüssigkeit zum Innenraum bzw. zum Abfluss hin vereinfacht werden, da dies ohne Veränderung bzw. Vergrößerung des Auffangelements selbst erfolgen kann.

Gemäß einem weiteren Aspekt der Erfindung ist der Auffangeinsatz aus Silikon ausgebildet. Dies kann eine Möglichkeit der konkreten Umsetzung darstellen.

Gemäß einem weiteren Aspekt der Erfindung ist das Küchengerät als Schublade ausgebildet. Dies kann die Umsetzung und Nutzung der zuvor beschriebenen Eigenschaften und Vorteile insbesondere bei derartigen Küchengeräten ermöglich.

Mit anderen Worten ist es bekannt, den Innenraum eines Einbauküchengeräts und insbesondere den Garraum eines Küchengeräts mit Dampffunktion wie beispielsweise einer Dampfgarschublade mit einem Deckel zu verschließen. Wird Dampf beim Garprozess erzeugt, so sollte der Garraum zum Deckel hin durch eine Dichtung gegen Dampf- und Wasseraustritt abgesichert sein. Diese Dichtung befindet sich an der Deckelunterseite in viereckiger Form, da z.B. die Dampfgarschublade (Garraum und Garraumdeckel) eine viereckige Form hat.

Beispielweise während eines Dampfgarprozesses kann sich kondensierendes Wasser an der Unterseite des Deckels bilden. Das kondensierte Wasser bzw. das Kondensat fließt bei dem Öffnen des Deckels nach unten und ggfs. über ein Scharnier des Deckels in den Garraum ab.

Dabei kann bisher das kondensierte Wasser nicht gezielt in eine ggfs. im Garraum platzierte Kondensatschale geführt und durch diese aufgefangen werden. Dies kann dazu führen, dass die Kondensatmenge im Garraum deutlich, beispielsweise um das 2,5fache, größer als die zugelassene Restwassermenge im Garraum von beispielsweise 50mL sein kann. Dies kann dazu führen, dass der Benutzer die Kondensatschale entnehmen und ausleeren und zusätzlich mehrfach den Garraum beispielsweise mit einem Schwammtuch auswischen muss, um das Kondenswasser bzw. das Restwasser aus dem Garraum zu entfernen.

Zur Abfuhr des Kondensats kann ein Abfluss vorgesehen werden, was aufgrund der vergleichsweise geringen Bauhöhe von üblicherweise 14 cm schwierig zu realisieren sein kann.

Eine Möglichkeit zum Abpumpen vorzusehen kann einen nicht-unerheblichen Aufwand darstellen und ebenfalls Bauraum erfordern, welcher ohnehin knapp sein kann.

Ggf. kann das ablaufendende Kondensat-Wasser vom Deckelrand über einen Scharnierrand in die seitlichen Schlitze, welche der zur Befestigung bzw. der Aufhängung von dem Deckelscharnier im Gerät dienen, in das Gerät hineinfließen. Dadurch kann die Gleiteigenschaft im Scharnier herabgesetzt bzw. beeinträchtigt werden.

Ggf. können zusätzliche Schutzmaßnahmen bei eindringendem Wasser im Gerät notwendig sein, um die Sicherheit zu gewährleisten.

Es kann auch eine Abtropflippe bzw. eine Auffanglippe auf der Unterseite am Deckel über dem Scharnier angebracht werden, um das Kondenswasser gezielt zur Kondensatschale zu leiten.

Nachteilig ist beim Auffangen von ablaufendem Kondensat-Wasser, dass mit einer Wasser-Auffangrinne, vergleichbar einer Dachrinne, an Kücheneinbaugeräten nur geringe Wassermengen aufgefangen und gesammelt werden können, da das Aufnahmevolumen begrenzt ist.

Größere Wassermengen wie z.B. an dem Deckel einer Dampfgarschublade mit ca. 75 mL können nicht ohne Überschwappen aufgenommen werden.

Eine Ableitung in ein Auffanggefäß ist aufgrund der Dachrinne-Kontur nicht möglich. Zudem gibt es kein Behälter, um das ganze Kondenswasser aufzufangen.

Es soll daher das Kondensat-Wasser vom Deckel gezielt vom Rand, d.h. von der Scharnierbefestigung, zur Garraummitte geführt und in die Kondensatschale geleitet, d.h. aufgefangen, werden können.

Erfindungsgemäß kann durch die Gestaltung der Garraum-Abdichtung in Trapezform die Garraum-Abdichtung auch gleichzeitig als Wasserleitkontur genutzt werden. Dazu können die an der Deckel-Unterseite verlaufenden Dichtungsprofile in "C"-Form oder "O"-Form ausgeführt sein.

Somit ist es nicht notwendig, eine separate bzw. zusätzlich Auffanglippe und bzw. oder Abtropflippe am Deckel vorzusehen.

Das Wasser kann vom Deckel an der Garraumdichtung zur Scharniermitte in eine Auffangkontur fließen. Die Auffangkontur kann als Dreieck ausgebildet sein.

Der Deckel weist eine Glasscheibe oder Metallscheibe auf bzw. ist aus einer Glasscheibe oder Metallscheibe gebildet.

Die Auffangkontur kann als tiefgezogene Pyramidenform, d.h. in der Seitenansicht als "Scalene Triangel" oder als "Right Triangel", im Garraum ausgeprägt sein, um das Kondensat-Wasser über eine tiefgezogene Ausprägung in die Kondensatschale zu führen. Zusätzlich kann die tiefgezogene Pyramidenform der Auffangkontur mit einer Silikoneinlage ausgestattet sein, um das Kondensat-Wasser über die Ausprägung der Silikonform in die Kondensatschale zu führen. In jedem Fall kann hierdurch eine Überbrückung vom Garraum zu der Kondensatschale bewirkt werden.

Vorteilhaft ist hieran, dass das Kondensat-Wasser gezielt geführt werden kann. Auch kann das Kondensat-Wasser gezielt in der Kondensatschale aufgefangen werden. Ggf. kann lediglich ein kleines zusätzliches Bauteil z.B. aus Silikon notwendig sein, um das Kondensat-Wasser vom Deckel aufzufangen und in die Kondensatschale zu führen (Überbrückung Garraum zu Kondensatschale).

Die Herstellung kann sich vereinfachen. Der Benutzer kann das Produkt leichter reinigen. Ablaufendendes Kondenswasser kann vom Deckelrand nicht über den Scharnierrand ggf. in die seitlichen Schlitze (zur Befestigung / Aufhängung von dem Deckelscharnier im Gerät) in das Gerät hineinfließen. Die Gleiteigenschaft im Scharnier wird durch das ablaufende Kondenswasser nicht nachhaltig herabgesetzt bzw. beeinträchtigt.

Einlaufendes Wasser muss im Gerät nicht geführt werden, so dass dieses Abtropfen kann, ohne die elektrische Sicherheit zu gefährden. Es werden im Gerät keine zusätzlichen Bauteile zum Auffangen und Ableiten von hineinlaufendem Wasser benötigt.

Mehrere Ausführungsbeispiele der Erfindung sind in den Zeichnungen rein schematisch dargestellt und werden nachfolgend näher beschrieben. Es zeigt
- Figur 1: eine perspektivische Darstellung eines Küchenmöbels mit einem erfindungsgemäßen Küchengerät gemäß eines ersten Ausführungsbeispiels als Dampfgarschublade im eingeschobenen Zustand;
- Figur 2: die Darstellung der Figur 1 im ausgezogenen Zustand des Küchengeräts;
- Figur 3: eine Draufsicht auf das erfindungsgemäße Küchengerät gemäß des ersten Ausführungsbeispiels mit vollständig geöffnetem bzw. zurückgeklapptem Deckel direkt von oben;
- Figur 4: das erfindungsgemäße Küchengerät gemäß des ersten Ausführungsbeispiels von der Seite mit fast vollständig geschlossenem Deckel;
- Figur 5: eine alternative Darstellung des erfindungsgemäßen Küchengeräts gemäß des ersten Ausführungsbeispiels ohne Deckel direkt von oben;
- Figur 6: ein erfindungsgemäßes Küchengerät gemäß eines zweiten Ausführungsbeispiels von der Seite mit fast vollständig geschlossenem Deckel; und
- Figur 7: das erfindungsgemäße Küchengerät gemäß des zweiten Ausführungsbeispiels ohne Deckel direkt von oben.

Die o.g. Figuren werden in kartesischen Koordinaten betrachtet. Es erstreckt sich eine Längsrichtung X, welche auch als Tiefe X oder als Länge X bezeichnet werden kann. Senkrecht zur Längsrichtung X erstreckt sich eine Querrichtung Y, welche auch als Breite Y bezeichnet werden kann. Senkrecht sowohl zur Längsrichtung X als auch zur Querrichtung Y erstreckt sich eine vertikale Richtung Z, welche auch als Höhe Z bezeichnet werden kann und der Richtung der Schwerkraft entspricht. Die Längsrichtung X und die Querrichtung Y bilden gemeinsam die Horizontale X, Y, welche auch als horizontale Ebene X, Y bezeichnet werden kann.

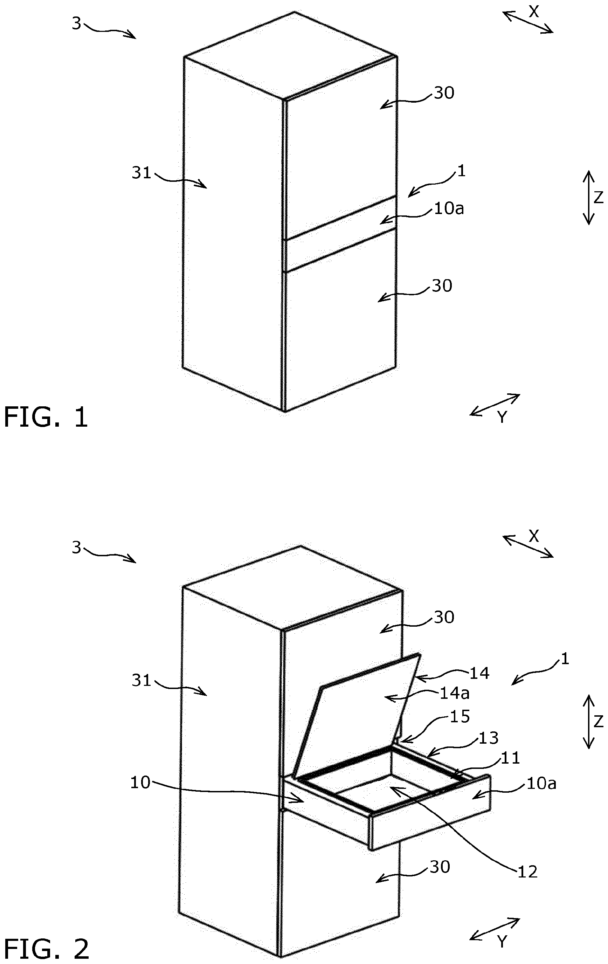

Figur 1 zeigt eine perspektivische Darstellung eines Küchenmöbels 3 mit einem erfindungsgemäßen Küchengerät 1 gemäß eines ersten Ausführungsbeispiels im eingeschobenen Zustand. Figur 2 zeigt die Darstellung der Figur 1 im ausgezogenen Zustand des Küchengeräts 1.

Das Küchenmöbel 3, welches auch als Küchenzeile 3 bezeichnet, werden kann, weist ein Möbelfront 30 bzw. mehrere Möbelblenden 30 auf, mit welcher bzw. mit welchen das Küchenmöbel 1 einem Benutzer zugewandt in der Längsrichtung X nach vorne hin abschließt. Die Möbelfront 30 wird von mehreren Türen, Klappen und dergleichen (nicht bezeichnet), ggfs. auch Schubladen (nicht dargestellt) gebildet, welche schwenkbar, klappbar bzw. ziehbar an einem Rahmen 31, Gestell 31 bzw. Korpus 31 des Küchenmöbels 3 angeordnet sind.

Entlang der vertikalen Richtung Z etwa mittig ist zwischen zwei Möbelfronten 30 ein erfindungsgemäße Küchengerät 1 in Form einer Dampfgarschublade 1 als Küchengerät 1 mit Dampffunktion angeordnet. Die Dampfgarschublade 1 weist ein Außengehäuse 10 auf, welches auch als äußeres Gehäuse 10 bezeichnet werden kann und die Dampfgarschublade 1 im Wesentlichen nach außen abschließt bzw. umschließt. Das Außengehäuse 10 schließt entlang der Längsrichtung X nach Vorne, d.h. zum Benutzer hin, mit einer Blende 10a, welche im eingeschobenen Zustand der Dampfgarschublade 1 flächig bündig mit den Möbelfronten 30 des Küchenmöbels 3 abschließt, siehe Figur 1. Seitlich in der Querrichtung Y ist ein Paar von Teleskopschienen (nicht dargestellt) an dem Außengehäuse 10 angeordnet, so dass die Dampfgarschublade 1 gegenüber dem Rahmen 30 des Küchenmöbels 3 in der Längsrichtung X ausgezogen und eingeschoben werden kann.

Innerhalb des Außengehäuses 10 ist ein Innengehäuse 11 angeordnet, welches auch als inneres Gehäuse 11 bezeichnet werden kann. Das Innengehäuse 11 schließt in der Längsrichtung X nach hinten sowie nach vorne bis zur Blende 10a, in der vertikalen Richtung Z nach unten sowie in der Querrichtung Y zu beiden Seiten mit dem Außengehäuse 10 ab, sodass zwischen dem Außengehäuse 10 und im Innengehäuse 11 ein Zwischenraum (nicht dargestellt) gebildet wird, welcher auch als Gehäuseraum bezeichnet werden kann. Dieser Zwischenraum stellt das Innere der Dampfgarschublade 1 dar.

Von dem Innengehäuse 11 wird ferner im Wesentlichen ein Innenraum 12 umschlossen, in welchem ein Garprozess bzw. ein Dampfgarprozess durchgeführt werden kann. Hierzu ist im Gehäuseraum bzw. im Zwischenraum der Dampfgarschublade 1 ein Dampferzeuger (nicht dargestellt) angeordnet, welcher Wasser verdampfen und den Wasserdampf in den Innenraum 12 fördern kann. Entsprechend kann der Innenraum 12 auch als Garraum 12 bezeichnet werden.

Der Innenraum 12 ist in der vertikalen Richtung Z für den Benutzer von oben durch eine Zugangsöffnung 13 hindurch zugänglich. Die Zugangsöffnung 13 kann mittels eines Verschlusselements 14 in Form eines Deckels 14 geschlossen und geöffnet werden. Der Deckel 14 ist hierzu mittels wenigstens eines Schwenkelements 14a in Form eines Scharniers 14a in der vertikalen Richtung Z nach oben hin schwenkbar mit dem Außengehäuse 10 der Dampfgarschublade 1 verbunden, so dass der Deckel 14 vom Benutzer von sich weg bzw. zur darüber befindlichen Möbelblende 30 hin hochgeschwenkt werden kann, um im ausgezogenen Zustand der Dampfgarschublade 1 auf den Garraum 12 zugreifen zu können, siehe Figur 2. Wird der Deckel 14 in die Horizontalen X, Y heruntergeschwenkt, wird der Garraum 12 verschlossen und die Dampfgarschublade 1 kann in das Küchenmöbel 3 eingeschoben werden, siehe Figur 1.

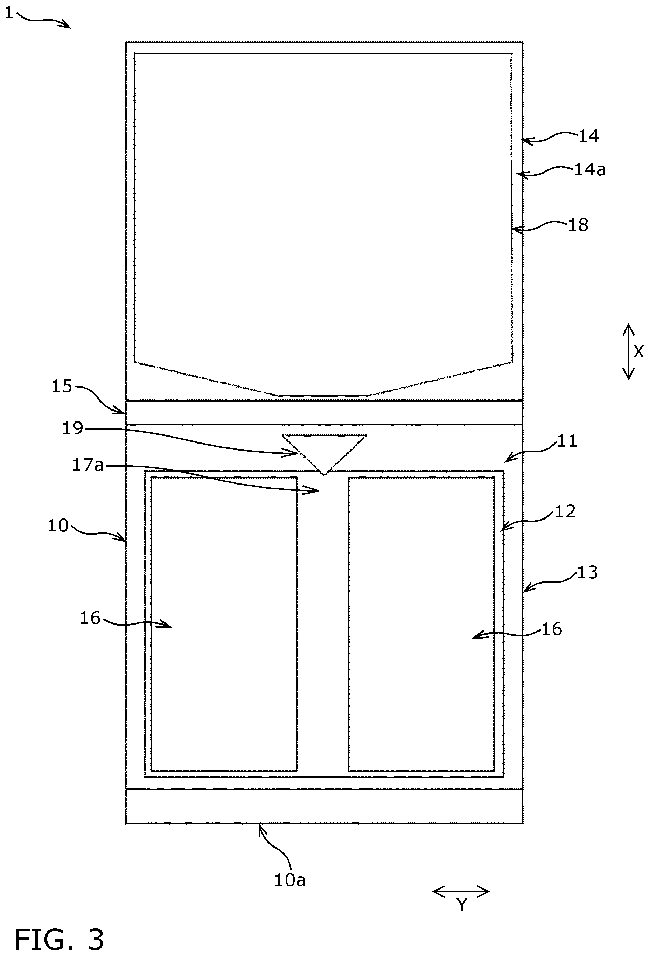

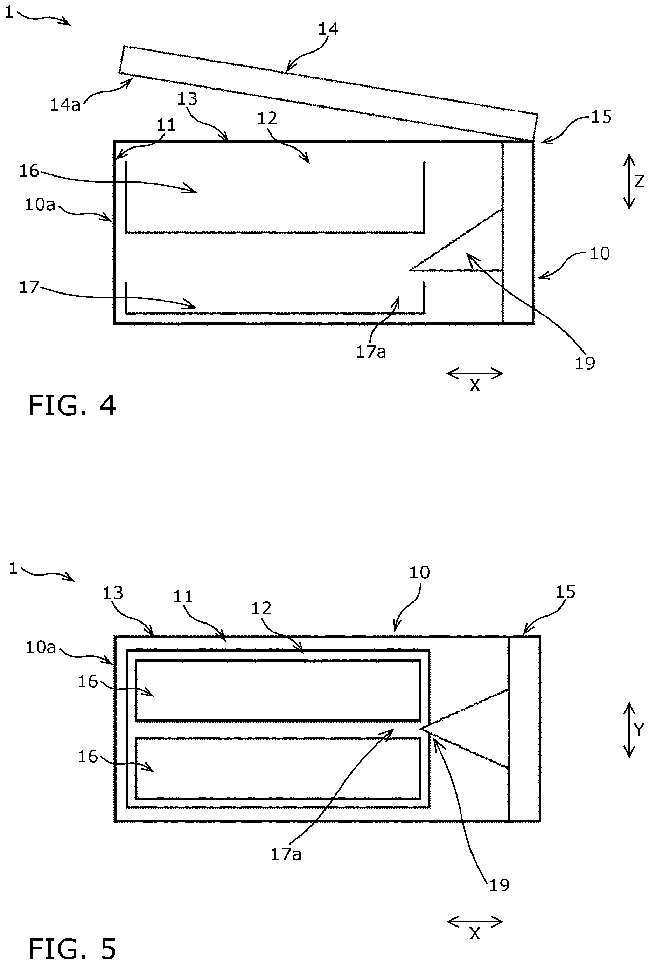

Figur 3 zeigt eine Draufsicht auf das erfindungsgemäße Küchengerät 1 gemäß des ersten Ausführungsbeispiels mit vollständig geöffnetem bzw. zurückgeklapptem Deckel 14 direkt von oben. Figur 4 zeigt das erfindungsgemäße Küchengerät 1 gemäß des ersten Ausführungsbeispiels von der Seite mit fast vollständig geschlossenem Deckel 14. Figur 5 zeigt eine alternative Darstellung des erfindungsgemäßen Küchengeräts 1 gemäß des ersten Ausführungsbeispiels ohne Deckel 14 direkt von oben.

Erfindungsgemäß ist ein Dichtelement 18 vorgesehen, welches auch als Dichtung 18 bezeichnet werden kann. Das Dichtelement 18 ist einstückig und endlos geschlossen aus Silikon mit einem C-Profil oder einem O-Profil ausgebildet und erstreckt sich an der Unterseite 14a des Deckels 14 im Wesentlichen an dessen Rand (nicht bezeichnet) entlang. Das Dichtelement 18 ist derart ausgebildet und an der Unterseite 14a des Deckels 14 angeordnet, dass der Spalt zwischen der Unterseite 14a und Deckels 14 und der Oberseite des Randbereichs (nicht bezeichnet) des Innenraums 12 bzw. dessen Zugangsöffnung 13 fluiddicht bzw. dampfdicht verschlossen werden kann.

Ferner ist das Dichtelement 18 ist derart ausgebildet und an der Unterseite 14a des Deckels 14 angeordnet, so dass eine Führung bzw. ein Ableiten von Flüssigkeit an der Unterseite 14a des hochgeklappten Deckels 14 zur Mitte in der Querrichtung Y erfolgen kann. Dies wird im betrachteten Ausführungsbeispiel mittels einer Trapezform derjenigen Kante der Dichtung 18, welche dem Schwenkelement 15 zugewandt ist und im Wesentlichen parallel zum Schwenkelement 15 bzw. zu dessen Schwenkachse verläuft erreicht. Ist der Deckel 14 hochgeklappt, so kann das Dichtelement 18 somit an der Unterseite 14a des hochgeschwenkten Deckels 14 herunterlaufende Flüssigkeit, insbesondere Kondenswasser, auffangen und in den Innenraum 12 hin leiten.

Es ist ferner ein Auffangelement 19 bzw. eine Auffangkontur 19 vorgesehen, welches in der Querrichtung Y mittig und dort zwischen zwei entnehmbaren Gargeschirren 16 bzw. Garbehältern 16 angeordnet ist und zu einem Kondensatbehälter 17, zu einer Kondensatschale 17 bzw. zu einem Auffangbehälter 17 hinführt, um dort Kondensat aufzunehmen. Der Kondensatbehälter 17 ist entnehmbar unterhalb der Gargeschirre 16 angeordnet. Der Bereich zwischen den beiden Gargeschirren 17 kann als Abfluss 17a angesehen und bezeichnet werden. Das Auffangelement 19 ist als tiefgezogenes pyramidenförmiges Bauteil ausgebildet und zum Abfluss 17a hin zeigend am Innengehäuse 11 befestigt.

Die aufgefangene Flüssigkeit kann somit gesammelt von der tiefsten Stelle, bei hochgeklapptem Deckel 14 betrachtet, des Dichtelements 18 nach unten auf das Auffangelement 19 tropfen und vom Auffangelement 19 weiter zum Abfluss 17a geleitet werden, um dort in den Kondensatbehälter 17 zu tropfen.

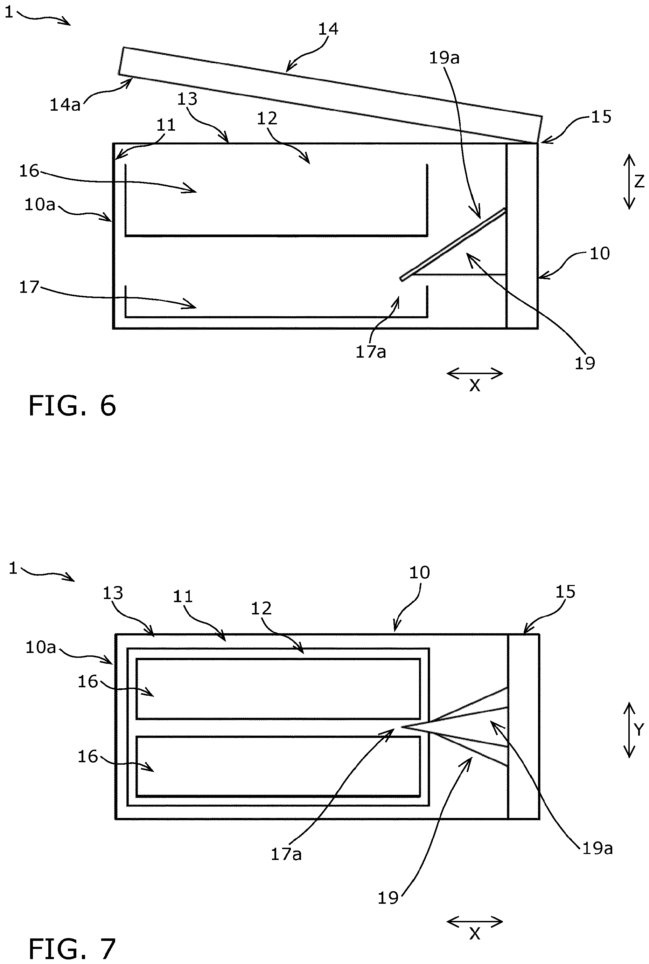

Figur 6 zeigt ein erfindungsgemäßes Küchengerät 1 gemäß eines zweiten Ausführungsbeispiels von der Seite mit fast vollständig geschlossenem Deckel 14. Figur 7 zeigt das erfindungsgemäße Küchengerät 1 gemäß des zweiten Ausführungsbeispiels ohne Deckel 14 direkt von oben.

In diesem Fall ist ein Auffangeinsatz 19a aus Silikon auf dem Auffangelement 19 angeordnet, so dass das Auffangelement 19 mittels des Auffangeinsatzes 19a zum Abfluss 17a hin verlängert wird, was das Erreichen des Abflusses 17a verbessert.

### Bezugszeichenliste (Bestandteil der Beschreibung)

- X: Längsrichtung; Tiefe; Länge
- Y: Querrichtung; Breite
- Z: vertikale Richtung; Höhe
- X, Y: Horizontale; horizontale Ebene

- 1: Küchengerät; Küchengerät mit Dampffunktion; Dampfgarschublade
- 10: Außengehäuse; äußeres Gehäuse
- 10a: Blende
- 11: Innengehäuse; inneres Gehäuse
- 12: Innenraum; Garraum
- 13: Zugangsöffnung
- 14: Verschlusselement; Deckel
- 14a: Unterseite bzw. Innenseite des Verschlusselements 14
- 15: Schwenkelement; Scharnier; Deckelscharnier
- 16: Gargeschirre; Garbehälter
- 17: Kondensatbehälter; Kondensatschale; Auffangbehälter
- 17a: Abfluss zum Kondensatbehälter 17
- 18: Dichtelement; Dichtung
- 19: Auffangelement; Auffangkontur
- 19a: Auffangeinsatz

- 3: Küchenmöbel; Küchenzeile
- 30: Möbelfront; Möbelblende
- 31: Rahmen; Gestell; Korpus

## Patentansprüche

1. Küchengerät (1), vorzugsweise Küchengerät (1) mit Dampffunktion, besonders vorzugsweise Dampfgarschublade (1),
mit einem Innenraum (12), vorzugsweise einem Garraum (12), welcher ausgebildet ist, wenigstens ein Gargeschirr und/oder wenigstens ein Lebensmittel durch eine Zugangsöffnung (13) von oben aufzunehmen, und
mit einem Deckel (14), welcher ausgebildet ist, durch Schwenken mittels eines Schwenkelements (15), vorzugsweise eines Scharniers (15), die Zugangsöffnung (13) des Innenraums (12) von oben zu verschließen und freizugeben,
**gekennzeichnet durch**
wenigstens ein Dichtelement (18), welches ausgebildet und an der Unterseite (14a) des Deckels (14) angeordnet ist,
• bei geschlossenem Deckel (14) den Innenraum (12) fluiddicht gegenüber der Unterseite (14a) des Deckels (14) abzudichten und
• bei hochgeschwenktem Deckel (14) herunterlaufende Flüssigkeit, insbesondere Kondenswasser, aufzufangen und in den Innenraum (12), vorzugweise in einen Abfluss (17a), zu leiten.

2. Küchengerät (1) nach Anspruch 1,
wobei sich das Dichtelement (18) der Unterseite (14a) des Deckels (14) in der Querrichtung (Y) zum Schwenkelement (15) hin, vorzugsweise mittig, verjüngt.

3. Küchengerät (1) nach Anspruch 1 oder 2,
wobei das Dichtelement (18) der Unterseite (14a) des Deckels (14) zum Schwenkelement (15) hin trapezförmig ausgebildet ist.

4. Küchengerät (1) nach Anspruch 1 oder 2,
wobei das Dichtelement (18) der Unterseite (14a) des Deckels (14) zum Schwenkelement (15) hin dreieckig ausgebildet ist.

5. Küchengerät (1) nach einem der vorangehenden Ansprüche,
wobei das Dichtelement (18) der Unterseite (14a) des Deckels (14) ein C-förmiges, vorzugsweise innenseitig offen, oder ein O-förmiges Profil aufweist.

6. Küchengerät (1) nach einem der vorangehenden Ansprüche,
ferner mit einem Auffangelement (19), welches ausgebildet und angeordnet ist, aufgefangene Flüssigkeit von dem Dichtelement (18) der Unterseite (14a) des Deckels (14) zu erhalten und, vorzugsweise mittig, in den Innenraum (12), vorzugweise in den Abfluss (17a), weiter zu leiten.

7. Küchengerät (1) nach Anspruch 6,
wobei das Auffangelement (19) ausgebildet und angeordnet ist, aufgefangene Flüssigkeit von dem Dichtelement (18) der Unterseite (14a) des Deckels (14) heruntertropfend zu erhalten.

8. Küchengerät (1) nach Anspruch 6 oder 7,
wobei das Auffangelement (19) ausgebildet und angeordnet ist, aufgefangene Flüssigkeit tropfend in den Innenraum (12), vorzugweise in den Abfluss (17a), weiter zu leiten.

9. Küchengerät (1) nach einem der Ansprüche 6 bis 8,
wobei der Innenraum (12) ausgebildet ist, in der Querrichtung (Y) zueinander beabstandet wenigstens zwei Gargeschirre (16) aufzunehmen,
wobei der Innenraum (12) in der Querrichtung (Y) zwischen den beiden Gargeschirren (16) einen Abfluss (17a), vorzugsweise eines Kondensatbehälters (17), aufweist, und
wobei das Auffangelement (19) ausgebildet und angeordnet ist, aufgefangene Flüssigkeit in den Abfluss (17a) zu leiten.

10. Küchengerät (1) nach einem der Ansprüche 6 bis 9,
wobei das Auffangelement (19) in der Querrichtung (Y) mittig angeordnet ist.

11. Küchengerät (1) nach einem der Ansprüche 6 bis 10,
wobei das Auffangelement (19) derart ausgebildet und angeordnet ist, so dass sich bei hochgeschwenktem Deckel (14) der tiefste Punkt oder Abschnitt des Dichtelements (18) der Unterseite (14a) des Deckels (14) in der vertikalen Richtung (Z) oberhalb des Auffangelements (19) befindet.

12. Küchengerät (1) nach einem der Ansprüche 6 bis 11,
wobei das Auffangelement (19) zum Innenraum (12), vorzugweise zu einem Abfluss (17a), hinzeigend pyramidenförmig zulaufend ausgebildet ist.

13. Küchengerät (1) nach einem der Ansprüche 6 bis 12,
ferner mit einem Auffangeinsatz (19a), welcher auf und/oder am Auffangelement (19) angeordnet und ausgebildet ist, das Auffangelement (19) zum Innenraum (12), vorzugweise zu einem Abfluss (17a), hin zu verlängern.

14. Küchengerät (1) nach Anspruch 13,
wobei der Auffangeinsatz (19a) aus Silikon ausgebildet ist.

15. Küchengerät (1) nach einem der vorangehenden Ansprüche,
wobei das Küchengerät (1) als Schublade ausgebildet ist.
